**Europäisches Patentamt**

(19) **European Patent Office**

**Office européen des brevets**

(11) Veröffentlichungsnummer: **0 024 482**
**B1**

(12) **EUROPÄISCHE PATENTSCHRIFT**

(45) Veröffentlichungstag der Patentschrift:
27.04.83

(51) Int. Cl.³: **G 02 F 1/133**

(21) Anmeldenummer: **80103140.2**

(22) Anmeldetag: **06.06.80**

(54) **Entspiegelte Flüssigkristallanzeigevorrichtung.**

(30) Priorität: **25.08.79 DE 2934478**

(43) Veröffentlichungstag der Anmeldung:
**11.03.81 Patentblatt 81/10**

(45) Bekanntmachung des Hinweises auf die Patenterteilung:
**27.04.83 Patentblatt 83/17**

(84) Benannte Vertragsstaaten:
**FR GB IT SE**

(56) Entgegenhaltungen:
**GB-A-1 108 411**

**PATENTS ABSTRACTS OF JAPAN, Band 1, Nr. 107,
21. September 1977, Seite 3590E77**

(73) Patentinhaber: **VDO Adolf Schindling AG,
Gräfstrasse 103, D-6000 Frankfurt/Main (DE)**

(72) Erfinder: **Preiss, Bernd, Fichtestrasse 33,
D-6238 Hofheim (DE)**
Erfinder: **Winnecker, Otto, Siedlungsleerhof,
D-6370 Oberursel 1 (DE)**

(74) Vertreter: **Könekamp, Herbert, Dipl.-Ing., Sodener
Strasse 9, D-6231 Schwalbach (DE)**

ACTORUM AG

Entspiegelte Flüssigkristallanzeigevorrichtung

Die Erfindung betrifft eine Flüssigkristallanzeigevorrichtung mit einer Flüssigkristallzelle und einem dem Betrachter zugewandten Polarisationsfilter zur Darstellung alphanumerischer Zeichen und Symbole ohne störende Reflexionen, insbesondere in Kraftfahrzeugen.

Bekannte Flüssigkristallanzeigevorrichtungen, die zur Darstellung alphanumerischer Zeichen und Symbole in Kraftfahrzeugen eingesetzt werden, bestehen im wesentlichen aus einer Flüssigkristallzelle mit zwei Zellengläsern, zwischen denen die Flüssigkristallsubstanz eingeschlossen ist. Die Zellengläser sind innen mit Elektroden belegt, die zur Erzeugung eines elektrischen Feldes in der Flüssigkristallsubstanz dienen. In Richtung des Betrachters vor den Zellengläsern ist ein erstes Polarisationsfilter angeordnet und in Betrachtungsrichtung hinter den Zellengläsern ein zweites Polarisationsfilter, das als Analysator bezeichnet wird. Auf diesen folgt in der Regel ein Reflektor.

Es hat sich herausgestellt, dass das erste Polarisationsfilter, das regelmässig als Polarisationsfilter-Folie ausgeführt ist, die auf eine plane Anzeigefläche direkt aufgeklebt ist, zu störenden Spiegelungen führt.

Der vorliegenden Erfindung liegt daher die Aufgabe zugrunde, eine Flüssigkristallanzeigevorrichtung nach dem Oberbegriff zu schaffen, bei der Spiegelungen durch das Polarisationsfilter vermieden werden.

Diese Erfindung wird aufgabengemäss dadurch gelöst, dass das Polarisationsfilter gegen die Flüssigkristallzelle konvex gewölbt ist.

Durch die konvexe Wölbung werden störende Reflexionen, die in das Auge des Betrachters gespiegelt werden, in wenig aufwendiger Weise vermieden.

In einer Ausführungsform der Erfindung in einem mit einem gewölbten Deckglas versehenen Kombinationsinstrument eines Kraftfahrzeuges ist die Polarisationsfilter-Folie auf das gewölbte Deckglas aufgeklebt.

Hier wird in besonders geschickter Weise die gewölbte Form des Deckglases des Kombinationsinstrumentes ausgenutzt, um durch die Polarisationsfilter-Folie keine störenden Spiegelungen entstehen zu lassen.

In einer anderen Ausführungsform der Erfindung ist anstelle der auf das gewölbte Deckglas des Kombinationsinstrumentes aufgeklebten Polarisationsfilter-Folie ein zugleich das Deckglas bildendes gewölbtes festes Polarisationsfilter vorgesehen.

Hier ist also das Polarisationsfilter, beispielsweise aus Glas bestehend, so ausgebildet, dass es zugleich die Funktion des üblichen Deckglases übernimmt. Hierdurch wird die Fertigung des Kombinationsinstrumentes mit einer Flüssigkristallzelle vereinfacht.

In einer weiteren Variante der Erfindung hat diese das Merkmal, dass das gewölbte Polarisationsfilter mit dem einen Zellenglas der Flüssigkristallzelle verbunden ist.

Hier wird also die Flüssigkristallzelle zusammen mit dem Polarisationsfilter als einstückige Einheit ausgebildet, die in Verbindung mit einem beliebigen Deckglas eingesetzt werden kann, ohne dass störende Reflexionen durch das Polarisationsfilter zu befürchten sind.

Die Erfindung wird im folgenden anhand einer Zeichnung mit zwei Figuren erläutert, und zwar zeigen:

Fig. 1 eine Ausführungsform, in der das Deckglas eines Kombiinstrumentes eines Kraftfahrzeuges mit einer Polarisationsfilter-Folie versehen ist und

Fig. 2 eine Ausführungsform, in der die Polarisationsfilter-Folie mit der Flüssigkristallzelle eine Einheit bildet.

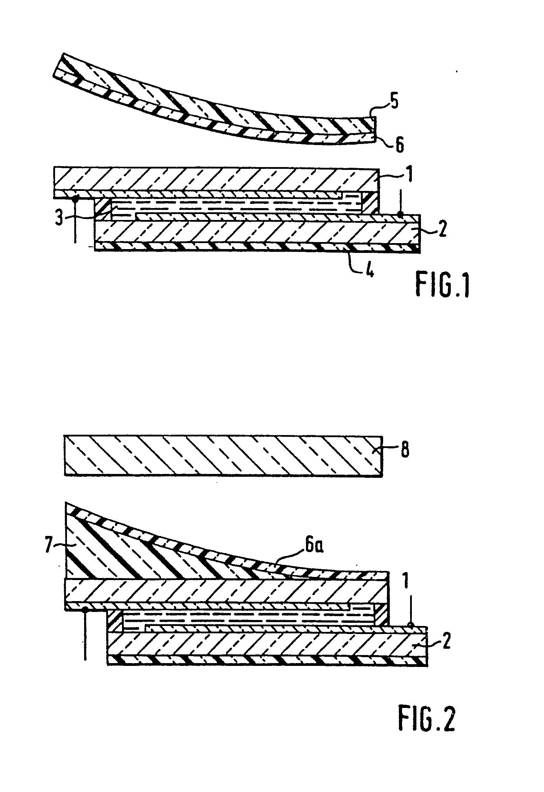

In Fig. 1 sind mit 1 und 2 die Zellengläser bezeichnet, die mit nicht dargestellten Elektroden belegt sind und eine Flüssigkristallsubstanz 3 einschliessen. An dieser Anordnung ist auf der dem Betrachter abgewandten Seite eine Polarisationsfilter-Folie 4 angeklebt. Hinter dieser kann sich noch ein in der Zeichnung nicht dargestellter Spiegel befinden.

Vor dieser Anordnung befindet sich in einem Abstand ein übliches gewölbtes Deckglas eines Kombiinstrumentes 5, dessen Wölbung Reflexionen von diesem Deckglas selbst ausschliesst.

Auf der Rückseite dieses Deckglases ist eine Polarisationsfilter-Folie 6 aufgeklebt, die in Verbindung mit der rückwärtigen Polarisationsfilter-Folie 4 und dem Flüssigkristall den gewünschten Kontrast der darzustellenden Zeichen ergibt.

Infolge der gewölbten Form der Polarisationsfilter-Folie 6, die durch die Form des Deckglases 5 vorgegeben ist, werden störende Reflexionen durch dieses Polarisationsfilter ausgeschaltet.

In der Ausführungsform nach Fig. 2 ist das Polarisationsfilter 6a auf das vordere Zellenglas 1 unter Anordnung einer Zwischenschicht 7 aufgeklebt, welche die gewünschte gewölbte Form, die von der Flüssigkristallzelle aus betrachtet konvex ist, ergibt.

Über dieser Einheit der Flüssigkristallzelle mit der Zwischenlage und der Polarisationsfilter-Folie 6a kann dann eine Abdeckscheibe 8 getrennt angeordnet werden, deren Form und Lage keinen Einfluss auf die Reflexionsfreiheit des Polarisationsfilters mit der Polarisationsfilter-Folie 6a hat.

## Patentansprüche

1. Flüssigkristallanzeigevorrichtung mit einer Flüssigkristallzelle und einem dem Betrachter zugewandten Polarisationsfilter zur Darstellung alphanumerischer Zeichen und Symbole ohne störende Reflexionen, insbesondere in Kraftfahrzeugen, dadurch gekennzeichnet, dass das Polarisationsfilter gegen die Flüssigkristallzelle konvex gewölbt ist.

2. Flüssigkristallanzeigevorrichtung nach Anspruch 1, in einem mit einem gewölbten Deckglas versehenen Kombinationsinstrument eines Kraftfahrzeuges, dadurch gekennzeichnet, dass eine Polarisationsfilter-Folie (6) auf das gewölbte Deckglas (5) aufgeklebt ist.

3. Flüssigkristallanzeigevorrichtung nach Anspruch 2, dadurch gekennzeichnet, dass anstelle der auf das gewölbte Deckglas aufgeklebten Polarisationsfilter-Folie ein zugleich das Deckglas bildendes gewölbtes, festes Polarisationsfilter vorgesehen ist.

4. Flüssigkristallanzeigevorrichtung nach Anspruch 1, dadurch gekennzeichnet, dass das gewölbte Polarisationsfilter (6a) mit dem einen Zellenglas (1) der Flüssigkristallzelle verbunden ist.

### Claims

1. Liquid-crystal indicating device comprising a liquid-crystal cell and a polarising filter facing the observer for displaying alphanumerical characters and symbols without disturbing reflections, more particularly in automobile vehicels, characterised in that the polarising filter is convexly curved towards the liquid-crystal cell.

2. Liquid-crystal indicating device according to Claim 1, in a combination instrument, provided with a curved glass cover, of an automobile vehicle, characterised in that a polarising filter foil (6) is adhesively bonded to the curved glass cover (5).

3. Liquid-crystal indicating device according to Claim 2, characterised in that, instead of the polarising filter foil adhesively bonded to the curved cover, there is provided a curved, fixed polarising filter which at the same time forms the glass cover.

4. Liquid-crystal indicating device according to Claim 1, characterised in that the curved polarising filter (6a) is connected to one cell glass (1) of the liquid-crystal cell.

### Revendications

1. Dispositif d'affichage à cristaux liquides comportant une cellule à cristaux liquides et un filtre de polarisation tourné vers l'observateur en vue de la représentation de signes et de symboles alphanumériques sans reflexions gênantes, en particulier dans des véhicules automobiles, dispositif caractérisé par le fait que ledit filtre de polasitation présente un bombement convexe en direction de ladite cellule à cristaux liquides.

2. Dispositif d'affichage à cristaux liquides selon la revendication 1, dans l'instrument combiné, pourvu d'un capot bombé en verre, d'un véhicule automobile, dispositif caractérisé par le fait qu'une feuille (6) de filtre polarisant est collée sur le capot en verre bombé (5).

3. Dispositif d'affichage à cristaux liquides selon la revendication 2, caractérisé par le fait qu'il comporte, à la place de la feuille de filtre polarisant collée sur le capot en verre bombé, un filtre de polarisation rigide et bombé qui forme en même temps ledit capot en verre.

4. Dispositif d'affichage à cristaux liquides selon la revendication 1, caractérisé par le fait que le filtre bombé de polarisation (6a) est relié à l'un (1) des verres cellulaires de la cellule à cristaux liquides.

FIG.1

FIG.2